# EUROPEAN PATENT SPECIFICATION

(11) **EP 3 873 025 B1**
(45) Date of publication and mention of the grant of the patent: **07.09.2022**
(21) Application number: 21181681.4
(22) Date of filing: 25.06.2021
(51) Int. Cl.: H04L 9/40, H04L 9/08

(54) **INFORMATION PROCESSING METHOD, APPARATUS, DEVICE, AND READABLE STORAGE MEDIUM**
VERFAHREN, GERÄT, VORRICHTUNG UND LESBARES SPEICHERMEDIUM ZUR INFORMATIONSVERARBEITUNG
PROCÉDÉ DE TRAITEMENT DE L'INFORMATION, APPAREIL, DISPOSITIF ET SUPPORT DE STOCKAGE LISIBLE

(30) Priority: 10.12.2020 CN 202011435194
(43) Date of publication of application: 01.09.2021
(73) Proprietor: Apollo Intelligent Connectivity (Beijing) Technology Co., Ltd., Beijing (CN)
(72) Inventor: LI, Daqing, Beijing (CN)
(74) Representative: J A Kemp LLP

(56) References cited:
- CN-A- 109 410 013
- JP-A- 2003 153 341
- US-A1- 2019 147 668

## Description

### TECHNICAL FIELD

The present disclosure relates to the technical fields of Internet of Vehicles, automatic driving, autonomic parking, and intelligent transportation, in particular to an information processing method, an apparatus, a readable storage medium, and a computer program product.

### BACKGROUND

With rapid development of Internet of Vehicles technology, more and more vehicles are equipped with an on-board terminal, through which a service can be pushed to a specific vehicle.

In order to push the service to the specific vehicle accurately, it is necessary to bind the vehicle and the on-board terminal. In a common binding method, a unique device ID is written in a storage area of the on-board terminal, and similarly, a unique vehicle identification number (VIN) is also written in a storage area of the vehicle. When the on-board terminal is assembled on the vehicle, a corresponding relationship between the device ID and the VIN is sent to a server through a computer of a production line or a 4S repair shop.

The above-mentioned way of binding the vehicle and the on-board terminal requires an extra operation in the production line or the repair shop in a manual way, which is inefficient and prone to errors.

US2019147668A1 discloses systems and methods for preventing spoofing of vehicle identification number (VIN) provisioning service. The system includes a memory that stores instructions for executing processes for preventing spoofing of vehicle identification number (VIN) provisioning service.

JP2003153341 discloses an in-vehicle communication terminal, including a navigation unit, and a communication module connected to the navigation unit for receiving and transmitting the information.

CN109410013A discloses an alarm method and system based on recognition and matching of VIN code obtained by an on-board device. The method includes binding the monitored vehicle information and an on-board monitoring device number.

### SUMMARY

The invention is set out in the appended set of claims.

The present disclosure provides an information processing method, an apparatus, a readable storage medium, and a computer program product, which binds a vehicle and an on-board terminal in an automatic way, and has high efficiency and is not error-prone.

According to technologies of the present disclosure, a vehicle and an on-board terminal are bound automatically, thereby improving binding efficiency and reducing an error rate, and at the same time, achieving that one vehicle can only be bound to one on-board terminal at any time while one on-board terminal can only be bound to one vehicle.

It should be understood that what is described in the present section is not intended to identify key or important features of embodiments of the present disclosure, nor is it intended to limit scope of the present disclosure. Other features of the present disclosure will become easily understood from following descriptions.

### BRIEF DESCRIPTION OF DRAWINGS

The drawings are for better understanding of the present solution and do not constitute a limitation of the present disclosure. Where:
FIG. 1 is a schematic diagram of a network architecture to which an information processing method provided by an embodiment of the present disclosure is applicable;
FIG. 2 is a flowchart of an information processing method provided by an embodiment of the present disclosure;
FIG. 3A is a schematic diagram of a process of generating a first binding identifier in an information processing method provided by an embodiment of the present disclosure;
FIG. 3B is a schematic diagram of a process of processing a first character in an information processing method provided by an embodiment of the present disclosure;
FIG. 4 is another flowchart of an information processing method provided by an embodiment of the present disclosure;
FIG. 5 is yet another flowchart of an information processing method provided by an embodiment of the present disclosure;
FIG. 6 is a structural schematic diagram of an information processing apparatus provided by an embodiment of the present disclosure;
FIG. 7 is another structural diagram of an information processing apparatus provided by an embodiment of the present disclosure; and
FIG. 8 is a block diagram of an electronic device for implementing an information processing method of an embodiment in the present disclosure.

### DESCRIPTION OF EMBODIMENTS

Exemplary embodiments of the present disclosure are described below in conjunction with the drawings, where various details of the embodiments of the present disclosure are included to facilitate understanding, which should be considered as merely exemplary. Therefore, it should be recognized by persons of ordinary skilled in the art that various changes and modifications can be made to the embodiments described herein without departing from scope of the present disclosure. Similarly, for the sake of clarity and conciseness, descriptions of well-known functions and structures are omitted in the following description.

At present, many vehicles are equipped with an on-board terminal, and the vehicles are networked through the on-board terminal to implement intelligent navigation, vehicle condition inquiry, and other services. In order to ensure that a server can accurately push a service to a specific vehicle, the vehicle and the on-board terminal are required to be bound.

Since an on-board terminal is assigned with a unique device identification (Device ID) before a delivery, the device identification is also called a device number; Similarly, the vehicle is assigned with a unique vehicle identification number (VIN) before a delivery, and the VIN is also called a vehicle frame number. Therefore, in a common binding method, when an on-board terminal device is assembled to a vehicle in a factory, a binding relationship between a VIN and a device ID is sent to a server by a computer of the factory, thereby realizing a binding between the vehicle and the on-board terminal device.

After a delivery of the vehicle, if the on-board terminal device on the vehicle is replaced, the VIN of the vehicle and a device ID of a new on-board terminal device will be sent to the server through a computer of a 4S shop, so that the server can establish a binding relationship between the VIN and the new device ID.

In the binding method, the VIN and the device ID are uploaded by an additional computer during production or repair and replacement, so that the binding relationship between the VIN and the device ID is established, which is inefficient and prone to errors. Moreover, there is no guarantee that one vehicle can only be bound to one on-board terminal while one on-board terminal can only be bound to one vehicle.

Embodiments of the present disclosure relates to the technical fields of Internet of Vehicles, automatic driving, autonomic parking, and intelligent transportation, aiming at, by binding a vehicle and a device in an automatic way, improving binding efficiency and reducing an error rate, and achieving that one vehicle can only be bound to one on-board terminal at any time while one on-board terminal can only be bound to one vehicle.

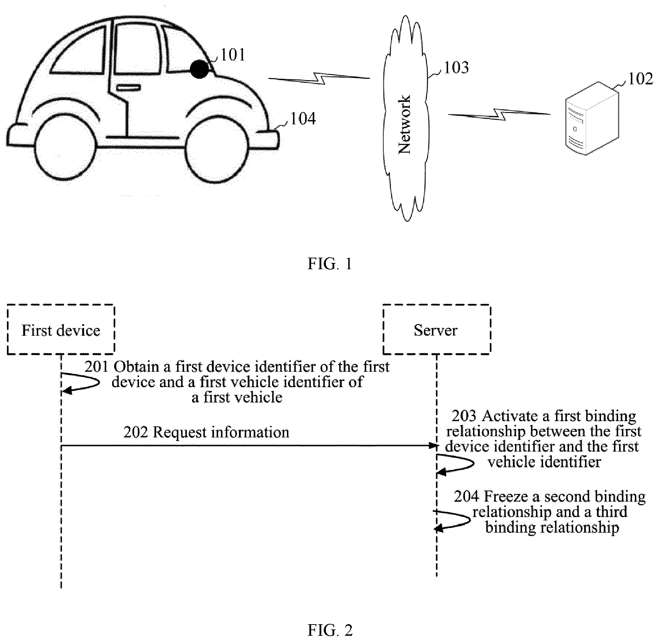

FIG. 1 is a schematic diagram of a network architecture to which an information processing method provided by an embodiment of the present disclosure is applicable. Referring to FIG. 1, the network architecture includes an on-board terminal 101, a server 102, a network 103, and a vehicle 104. The on-board terminal 101 is provided in the vehicle 104, and the on-board terminal 101 and the vehicle 104 are connected by a bus, such as a controller area network (CAN) bus. The on-board terminal 101 and the server 102 establish a network connection through the network 103. The network 103 includes a wifi network, a data network, etc.

A user interacts with the server 102 through the network 103 using the on-board terminal 101 to receive or send a message. The on-board terminal 101 is installed with various communication client disclosures, such as a video playing disclosure, a navigation disclosure, a search disclosure, an instant messaging tool, and a mailbox client. The on-board terminal 101 is also called a vehicle machine, an intelligent on-board device, an intelligent on-board terminal, a vehicle dispatching and monitoring terminal, an on-board wireless terminal, etc.

The server 102 is a server capable of providing various services, such as a billing service and a message pushing service. The server 102 is used to set a binding relationship between the vehicle and the on-board terminal, and push a service to a specific vehicle according to the binding relationship between the vehicle and the on-board terminal.

The server 102 may be hardware or software. When the server 102 is hardware, the server 102 is a distributed server cluster composed of a single server or a plurality of servers. When the server 102 is software, the server 102 may be a plurality of software modules or a single software module, etc., which is not limited by the embodiment of present disclosure

It should be understood that the number of the on-board terminal 101, the server 102, and the network 103 in FIG. 1 is only illustrative. In an actual implementation, any number of the on-board terminal 101, the server 102, and the network 103 are deployed according to actual demands.

In the below, based on the network architecture shown in FIG. 1, an information processing method described in the embodiment of the present disclosure is described in detail. Exemplarily, please make reference to FIG. 2.

FIG. 2 is a flowchart of an information processing method provided by an embodiment of the present disclosure. The present embodiment is explained from a perspective of an interaction between a server and an on-board terminal, and the present embodiment includes:
201, a first device obtains a first device identifier of the first device and a first vehicle identifier of a first vehicle.

In the embodiment of the present disclosure, the first device is an on-board terminal, etc. Taking the first device being an on-board terminal as an example, each on-board terminal is assigned with a unique on-board terminal identifier before a delivery, the unique on-board terminal identifier is, for example, a device ID, and each on-board terminal has its own unique on-board terminal identifier. Before the delivery, a device identifier of the on-board terminal is written into a safe area on a memory of the on-board terminal. Similarly, each vehicle is assigned with a unique vehicle identifier before a delivery, the unique vehicle identifier is, for example, a VIN, and each vehicle has its own unique vehicle identifier. Before the delivery, the vehicle identifier is written into a safe area on a memory of the vehicle.

The first device is installed on the first vehicle. When the first device is enabled, the first device reads the first device identifier from a local safe area; and at the same time, the first vehicle identifier stored in a safety area of the vehicle is obtained through a CAN bus.

202, the first device sends request information to the server.

Accordingly, the server receives the request information from the first device.

The request information carries the first device identifier for identifying the first device and the first vehicle identifier for identifying the first vehicle.

203, the server activates a first binding relationship between the first device identifier and the first vehicle identifier.

After receiving the first device identifier and the first vehicle identifier sent by the first device, the server considers that the first device is installed on the first vehicle, thus the server activates the first binding relationship between the first device identifier and the first vehicle identifier. In a subsequent service pushing project, the server determines the first device bound to the first vehicle according to the first binding relationship, and pushes a service to the first device, thereby pushing the service to a specific vehicle.

204, the server freezes a second binding relationship and a third binding relationship. The second binding relationship is a binding relationship between the first device identifier and a second vehicle identifier for identifying a second vehicle, and the third binding relationship is a binding relationship between a second device identifier for identifying a second device and the first vehicle identifier.

Exemplarily, when receiving the first device identifier and the first vehicle identifier, the server considers that the first device is currently installed on the first vehicle. In order to ensure that one vehicle can only be bound to one on-board terminal and one on-board terminal can only be bound to one vehicle at any time, the server freezes the second binding relationship and the third binding relationship in an old binding relationship, that is, unbinding a binding relationship between the first vehicle and the second device, as wells as a binding relationship between the second vehicle and the first device.

According to the information processing method provided by the embodiment of the present disclosure, every time the first device is enabled, the request information carrying the first device identifier for identifying the first device and the first vehicle identifier for identifying the first vehicle is sent to the server. After receiving the request information, the server activates the first binding relationship between the first device identifier and the first vehicle identifier, so that the first device and the first vehicle are bound. At the same time, the server freezes the binding relationship between the first vehicle and the second device, as well as the binding relationship between the second vehicle and the first device. By using this method, a vehicle and an on-board terminal are bound automatically, thereby improving binding efficiency and reducing an error rate, and at the same time, achieving that one vehicle can only be bound to one on-board terminal at any time while one on-board terminal can only be bound to one vehicle.

In the embodiment, when the server activates the first binding relationship between the first device identifier and the first vehicle identifier, the server generates a first binding identifier according to the first device identifier and the first vehicle identifier. A binding relationship table is stored in a remote or local database of the server, the binding relationship table stores a corresponding relationship among a device identifier, a vehicle identifier, and a binding identifier. Different corresponding relationships contain different binding identifiers, and at least one of the device identifier and the vehicle identifier is different. The binding identifier in the binding relationship table is, for example, a unique identifier generated by the server for the device identifier and the vehicle identifier using an algorithm, and the binding identifier is, for example, a universally unique identifier (UUID). Taking the first device being an on-board terminal and the device ID being an on-board terminal identifier as an example, each binding identifier in the relationship table satisfies the following conditions.
1. For a same group of vehicle identifiers and on-board terminal identifiers, a binding identifier generated each time by the server for this group of vehicle identifiers and on-board terminal identifiers is the same. That is to say, as long as the on-board terminal identifier and the vehicle identifier are consistent, a same binding identifier will be generated in each operation.
2. As long as either of the on-board terminal identifier or the vehicle identifier changes, the server generates a different binding identifier;
3. At any time, each binding identifier corresponds to a unique identifier bit, and the unique identifier bit is used to indicate a state of a binding relationship corresponding to the binding identifier, such as an activated state or a frozen state. When a binding identifier is in an activated state, it means that a binding relationship corresponding to the binding identifier is available, and the server can determine a vehicle where the on-board terminal is located according to the binding relationship, and push a service. When a binding identifier is in a frozen state, it means that a binding relationship corresponding to the binding identifier is unavailable.

**Table 1**

| Vehicle identifier | On-board terminal identifier | Binding identifier | Identifier bit |
|---|---|---|---|
| VIN 1 | Device ID a | UUID A | 1 |
| VIN 2 | Device ID b | UUID B | 0 |
| VIN1 | Device ID b | UUID C | 0 |

For example, in Table 1, UUID A and UUID B are different UUIDs, and UUID A and UUID B correspond to a same vehicle identifier, but their on-board terminal identifiers are different; and UUID A and UUID C are different, and UUID A and UUID C correspond to a same on-board terminal identifier, but their vehicle identifier are different. An identifier bit of UUID A is 1, which means that UUID A is in an activated state; identifier bits of UUID B and UUID C are 0, which means that the two UUIDs are in a frozen state.

After the server generates the first binding identifier, if the first binding identifier does not exist in the relationship table, the first device identifier, the first vehicle identifier, and the first binding identifier are written into the binding relationship table, that is, the first binding relationship, the first binding identifier, and a corresponding relationship between the first binding relationship and the first binding identifier are stored in the binding relationship table.

When the first binding identifier exists in the binding relationship table and the first binding identifier is in an activated state, it means that the first device and the first vehicle have been bound and the binding relationship is valid. When the first binding identifier exists in the binding relationship table and the first binding identifier is in a frozen state, it means that the first device and the first vehicle were once bound, and subsequently the first device is transferred to another vehicle, or the first vehicle is bound to the second device. After that, the first device is re-bound to the first vehicle. At this time, the server sets the first binding identifier to be in an activated state and reactivates the binding relationship between the first vehicle and the first device. In addition, in order to prevent replacement errors, the server sends prompt information to the first device to prompt the user that the first device has been transferred to other vehicles repeatedly and whether to continue binding the first device and the first vehicle.

With this solution, a purpose that the server can quickly bind the first vehicle and the first device is realized.

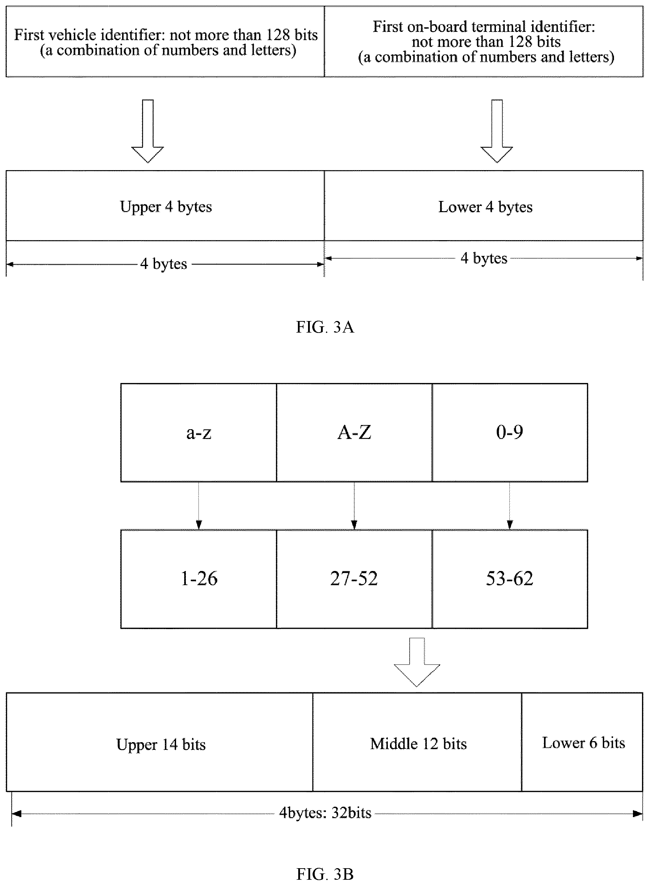

In the embodiment, when the server generates the first binding identifier, in one way, since the first device identifier and the first vehicle identifier are unique respectively, the server combines the first device identifier and the first vehicle identifier into a character string, the character string is also unique, and the server takes the character string as the first binding identifier. In another way, the server determines a first binary number and a second binary number of a first character in the first vehicle identifier, where the first binary number is used to represent a position of the first character in the first vehicle identifier, the second binary number is used to represent a value of the first character, and the first character is any character in the first vehicle identifier; and determines first target bytes according to the first binary number and the second binary number of each first character in the first vehicle identifier. At the same time, the server determines a third binary number and a fourth binary number of a second character in the first device identifier, where the third binary number is used to represent a position of the second character in the first device identifier, and the fourth binary number is used to represent a value of the second character; and determines second target bytes according to the third binary number and the fourth binary number of each second character in the first device identifier. Then, the server generates the first binding identifier according to the first target bytes and the second target bytes. Exemplarily, please make reference to FIG. 3A.

FIG. 3A is a schematic diagram of a process of generating a first binding identifier in an information processing method provided by an embodiment of the present disclosure. Referring to FIG. 3A, both the first device identifier and the first vehicle identifier are character strings not more than 128, and the character strings are combinations of numbers and letters. A number is, for example, 0 to 9, and a letter is, for example, a to z, A to Z, etc. Where, a to z may be represented by numbers 1 to 26, A to Z may be represented by numbers 27 to 52, and 0 to 9 may be represented by numbers 53 to 62.

The first binding identifier generated by the server is 8 bytes, and upper 4 bytes of the 8 bytes are generated according to the first vehicle identifier, the upper 4 bytes are also called first target bytes. Lower 4 bytes are generated according to the first device identifier, and the lower 4 bytes are also called second target bytes. In the below, how the server generates the upper 4 bytes will be explained in detail. The lower 4 bytes are generated in a similar way to those of the upper 4 bytes.

FIG. 3B is a schematic diagram of a process of processing a first character in an information processing method provided by an embodiment of the present disclosure.

Referring to FIG. 3B, the upper 4 bytes include 32 bits. Lower 6 bits of the 32 bits are determined according to a value of the first character, and a to z, A to Z, and 0 to 9 may be represented by 0 to 63, that is, a decimal value of the 6 bits ranges from 0 to 63. First 14 bits of the 32 bits are determined according to a position of the first character in the first vehicle identifier, and a represented range thereof is 0 to 16383, where upper 7 bits are reserved for carry and lower 7 bits are used to represent the position of the first character, and a range thereof is 0 to 128. According to a decimal calculation, 0 to 63 represents a first bit; 64 to 127 represents a second position; and (n-1)×64 to (n × 64-1) represents a n-th bit, where 0≤n≤ 128 and is an integer. The remaining middle 12 bits are all 0. The first character is any character in the first vehicle identifier.

It is assumed that the first vehicle identifier is a 17-byte character string, which is ab0123456789abcde from right to left, a character on a first bit is e, a character on a second bit is d, and a character on a third bit is c .... Since a to z are represented by numbers in 1 to 26, the character e on the first bit has a value of 5; the character d on the second bit has a value of 4; the character c on the third bit has a value of 3; the character b on the fourth bit has a value of 2; and the character a on the fifth bit has a value of 1. Then following relationships can be obtained:
1) e=5+0×64, upper 14 bits are 0000000000000, and lower 6 bits are 000101;
2) d=4+1×64, upper 14 bits are 0000000000001, and lower 6 bits are 000100;
3) c=3+2×64, upper 14 bits are 000000000010, and lower 6 bits are 000011;
4) b=2+3×64, upper 14 bits are 000000000011, and lower 6 bits are 000010;
5) a=1+5×64, upper 14 bits are 000000000110, and lower 6 bits are 000001;

In this way, upper 14 bits and lower 6 bits of each first character in the 17-byte first vehicle identifier can be obtained. The upper 14 bits are also called the first binary number and the lower 6 bits are also called the second binary number.

After that, the server sums 17 second binary numbers, and once a sum is greater than 111111, then a carry is performed, that is, middle 12 bits has been changed; similarly, the server sums 17 first binary numbers. Then, the server can obtain the first target bytes of 32 bits, that is, upper 4 bytes.

The server processes the first device identifier in the same way to obtain the second target bytes, that is, the lower 4 bytes. After that, the server obtains an 8-byte first binding identifier according to the upper 4 bytes and the lower 4 bytes, and converts the 8-byte first binding identifier to decimal.

After obtaining a decimal first binding identifier, the server stores the first vehicle identifier, the first device identifier, and the decimal first binding identifier in the binding relationship table. When a service is pushed later, the service to be pushed carries the decimal first binding identifier, and the server directly determines the first device and the first vehicle from the binding relationship table according to the first binding identifier, without traversing all binding identifiers, which is fast in searching and occupies less space.

It should be noted that although the upper 4 bytes are obtained according to the first vehicle identifier and the lower 4 bytes are obtained according to the first device identifier, it is not limited by the embodiment of the present disclosure. In other feasible ways, the upper 4 bytes may be obtained according to the first device identifier, and the lower 4 bytes may be obtained according to the first vehicle identifier.

In the embodiment, after the server generates the first binding identifier, if the first binding identifier does not exist in the binding relationship table, the server searches the binding relationship table according to the first device identifier and determines whether the second binding relationship exists in the binding relationship table. If the second binding relationship exists in the binding relationship table, it is determined that the first device has been bound to the second vehicle, which indicates that the first device is installed on the first vehicle after being detached from the second vehicle; and if the second binding relationship does not exist in the binding relationship table, it means that the first device is a brand-new on-board terminal and has never been bound to a certain vehicle.

With this solution, a purpose of tracking which vehicles the first device has been used on is achieved.

In the embodiment, after the server generates the first binding identifier, if the first binding identifier does not exist in the binding relationship table, the server searches the binding relationship table according to the first vehicle identifier and determines whether the third binding relationship exists in the binding relationship table. If the third binding relationship exists in the binding relationship table, it is determined that the first vehicle has been bound to the second device, which means that the first vehicle has used the second device before, and then the second device is detached and the first device is installed; if the third binding relationship does not exist in the binding relationship table, it means that the first vehicle has never been bound to any on-board terminal.

With this solution, a purpose of tracking which on-board terminals have been used by vehicles is achieved.

In the embodiment, the server generates a key pair in advance, where the key pair includes a public key and a private key. Then, the server sends the public key to the first device.

Exemplarily, before the delivery of the first device, the server uses an asymmetric encryption algorithm to generate the key pair and sends the public key in the key pair to the first device. After receiving the public key, the first device uses the public key to encrypt data to be encrypted and send it to the server, thus improving reliability of a previous communication between the server and the first device.

In the embodiment, after receiving the public key, the first device uses the public key to encrypt the first device identifier and the first vehicle identifier to obtain encrypted data. Then, the encrypted data is carried in the request information and sent to the server. After receiving the encrypted data, the server decrypts the encrypted data using a local private key to obtain the first device identifier and the first vehicle identifier.

Exemplarily, in order to prevent the first device identifier and the first vehicle identifier in the request information from being tampered or intercepted, the first device encrypts the first device identifier and the first vehicle identifier using the public key to obtain the encrypted data. Then, the encrypted data is sent to the server.

With this solution, the reliability of the previous communication between the server and the first device is improved.

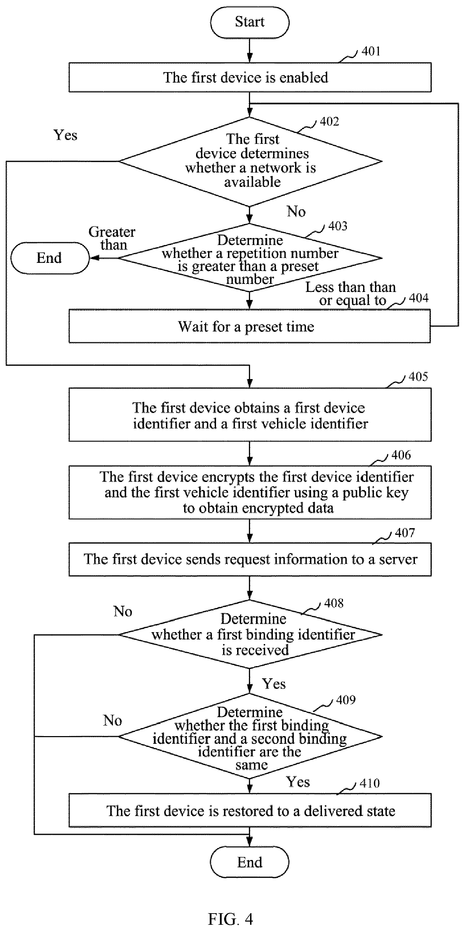

FIG. 4 is another flowchart of an information processing method provided by an embodiment of the present application. The embodiment is explained from a perspective of a first device, and the present embodiment includes:
401, the first device is enabled.

The first device and a first vehicle may be enabled at the same time or at different time. For example, when a user wants to pick up a vehicle from an underground garage, the vehicle is powered on and the first device and the first vehicle are enabled at the same time; for another example, when the user rests on a roadside and wants to use the first device for entertainment, the first device is enabled.

402, the first device determines whether a network is available. If the network is not available, step 403 is executed; and if the network is available, step 405 is executed.

403, determine whether a repetition number is greater than a preset number. If the repetition number is less than or equal to the preset number, step 404 is executed; and if the repetition number is larger than the preset number, the method ends.

Exemplarily, the repetition number is, for example, 5, which is not limited by the embodiment of the present disclosure.

404, wait for a preset time, and then execute step 402.

Exemplarily, the preset time is, for example, 60 seconds, which is not limited by the embodiment of the present disclosure.

405, the first device obtains a first device identifier and a first vehicle identifier.

406, the first device encrypts the first device identifier and the first vehicle identifier using a public key to obtain encrypted data.

407, the first device sends request information to a server.

The request information carries the encrypted data.

408, the first device determines whether a first binding identifier is received. If the first device receives the first binding identifier, step 409 is executed; and if the first device does not receive the first binding identifier, the method ends.

409, the first device determines whether the first binding identifier and a second binding identifier are the same. If the first binding identifier and the second binding identifier are different, step 410 is executed; and if the first binding identifier and the second binding identifier are the same, the method ends.

410, the first device is restored to a delivered state.

Exemplarily, if the first binding identifier and the second binding identifier are different, it means that the first device has been used on other vehicles. Historical data on the first device are generated by other users operating the first device, such as navigation data and Internet access data, which is not related to the user of the first vehicle. Therefore, the first device destroys the historical data, thereby restoring the first device to a delivered value.

With this solution, by automatically destroying the historical data for restoring to a delivered value, a purpose of releasing storage space, memory, and other resources of the first device is achieved.

In the embodiment, before executing step 205, the first device also determines whether the second binding identifier is saved locally. If the second binding identifier is not saved locally, it means that the first device is a brand-new on-board terminal and has never been used in other vehicles. At this time, after receiving the first binding identifier, the first device directly stores the first binding identifier locally. If the second binding identifier is saved locally, it means that the first device is not a brand-new on-board terminal, and is once bound to a certain vehicle while the binding relationship is frozen, or, is bound to a certain vehicle while the binding relationship is in an activated state.

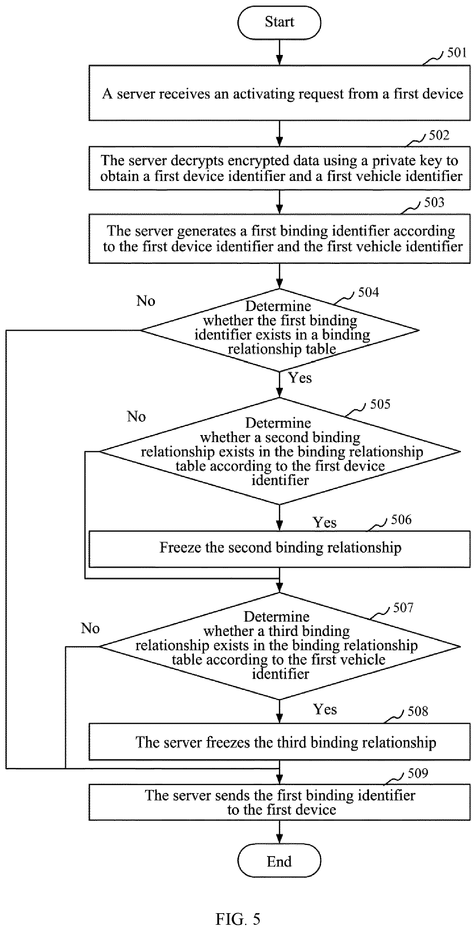

FIG. 5 is yet another flowchart of an information processing method provided by an embodiment of the present disclosure. The embodiment is explained from a perspective of a first vehicle, and the present embodiment includes:
501, a server receives request information from a first device.

The request information carries encrypted data, and the encrypted data is obtained by encrypting a first device identifier and a first vehicle identifier by the first device using a public key.

502, the server decrypts the encrypted data using a private key to obtain the first device identifier and the first vehicle identifier.

503, the server generates a first binding identifier according to the first device identifier and the first vehicle identifier.

504, the server determines whether the first binding identifier exists in a binding relationship table. If the first binding identifier does not exist in the binding relationship table, step 505 is executed; and if the first binding identifier exists in the binding relationship table, step 509 is executed.

505, the server determines whether a second binding relationship exists in the binding relationship table according to the first device identifier. If the second binding relationship exists in the binding relationship table, step 506 is executed; and if the second binding relationship does not exist in the binding relationship table, step 507 is executed.

The second binding relationship is a binding relationship between the first device identifier and a second vehicle identifier.

506, the server freezes the second binding relationship.

Exemplarily, the server marks a binding identifier of the first device previous as being in an invalid state, that is, in a frozen state.

507, the server determines whether a third binding relationship exists in the binding relationship table according to the first vehicle identifier. If the third binding relationship exists in the binding relationship table, step 508 is executed; and if the third binding relationship does not exist in the binding relationship table, step 509 is executed.

508, the server freezes the third binding relationship.

Exemplarily, the server marks a binding identifier of the first vehicle previous as being in an invalid state, that is, in a frozen state.

509, the server sends the first binding identifier to the first device.

The server determines whether the first binding identifier exists in the binding relationship table, and if so, set the first binding identifier to be in an activated state and send the first binding identifier to the first device. If the first binding identifier does not exist in the binding relationship table, a corresponding relationship among the first device identifier, the first vehicle identifier, and the first binding identifier is added to the binding relationship table, and the first binding identifier is set to be in an activated state.

The above describes a specific implementation of the information processing method mentioned in the embodiment of the present disclosure. The following are apparatus embodiments of the present disclosure, which may be used to execute the method embodiments of the present disclosure. For details not disclosed in the apparatus embodiments of the present disclosure, please make reference to the method embodiments of the disclosure.

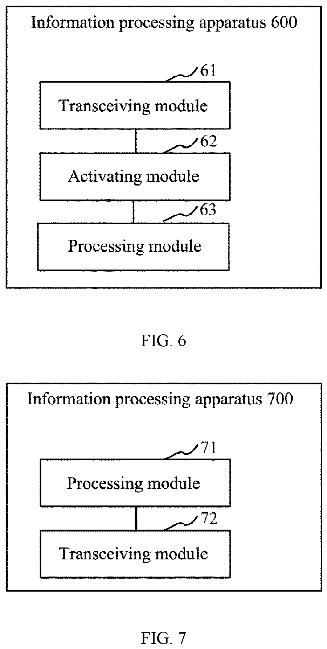

FIG. 6 is a structural schematic diagram of an information processing apparatus provided by an embodiment of the present disclosure. The apparatus may be integrated in an electronic device or implemented by an electronic device such as a server. As shown in FIG. 6, in the present embodiment, the information processing apparatus 600 includes:
a transceiving module 61, configured to receive request information from a first device, where the request information carries a first device identifier for identifying the first device and a first vehicle identifier for identifying a first vehicle;
an activating module 62, configured to activate a first binding relationship between the first device identifier and the first vehicle identifier; and
a processing module 63, configured to freeze a second binding relationship and a third binding relationship, where the second binding relationship is a binding relationship between the first device identifier and a second vehicle identifier for identifying a second vehicle, and the third binding relationship is a binding relationship between a second device identifier for identifying a second device and the first vehicle identifier.

The activating module 62 is configured to generate a first binding identifier according to the first device identifier and the first vehicle identifier; when the first binding identifier does not exist in a binding relationship table, add the first binding relationship, the first binding identifier, and a corresponding relationship between the first binding relationship and the first binding identifier to the binding relationship table, where the binding relationship table is used to store a corresponding relationship among a device identifier, a vehicle identifier, and a binding identifier, different corresponding relationships contain different binding identifiers, and at least one of the device identifier and the vehicle identifier is different; and set the first binding identifier as being in an activated state.

In a feasible design, when generating the first binding identifier according to the first device identifier and the first vehicle identifier, the activating module 62 is configured to determine a first binary number and a second binary number of a first character in the first vehicle identifier, where the first binary number is used to represent a position of the first character in the first vehicle identifier, the second binary number is used to represent a value of the first character, and the first character is any character in the first vehicle identifier; determine first target bytes according to the first binary number and the second binary number of each first character in the first vehicle identifier; determine a third binary number and a fourth binary number of a second character in the first device identifier, where the third binary number is used to represent a position of the second character in the first device identifier, and the fourth binary number is used to represent a value of the second character, determine second target bytes according to the third binary number and the fourth binary number of each second character in the first device identifier; and generate the first binding identifier according to the first target bytes and the second target bytes.

In a feasible design, before freezing the second binding relationship and the third binding relationship, the processing module 63 is further configured to determine whether the second binding relationship exists in the binding relationship table according to the first device identifier when the first binding identifier does not exist in the binding relationship table; and if the second binding relationship exists in the binding relationship table, determine that the first device has been bound to the second vehicle.

In a feasible design, before freezing the second binding relationship and the third binding relationship, the processing module 63 is configured to determine that whether the third binding relationship exists in the binding relationship table according to the first vehicle identifier if the first binding identifier does not exist in the binding relationship table; and if the third binding relationship exists in the binding relationship table, determine that the first vehicle has been bound to the second device.

In a feasible design, the processing module 63 is further configured to generate a key pair before the transceiving module 61 receives the request information from the first device, where the key pair includes a public key and a private key; and
the transceiving module 61 is further configured to send the public key to the first device.

In a feasible design, before generating the first binding identifier according to the first device identifier and the first vehicle identifier, the processing module 63 is further configured to decrypt encrypted data carried by the request information using the private key to obtain the first device identifier and the first vehicle identifier, where the encrypted data is obtained by the first device through encrypting the first device identifier and the first vehicle identifier using the public key.

In a feasible design, the transceiving module 61 is further configured to send the first binding identifier to the first device after the processing module 63 generates the first binding identifier according to the first device identifier and the first vehicle identifier.

FIG. 7 is another structural diagram of an information processing apparatus provided by an embodiment of the present disclosure. The apparatus may be integrated in an electronic device or implemented by an electronic device such as an on-board terminal. As shown in FIG. 7, in the present embodiment, the information processing apparatus 700 includes:
a processing module 71, configured to obtain a first device identifier for identifying a first device and a first vehicle identifier for identifying a first vehicle; and
a transceiving module 72, configured to send request information to a server, where the request information carries the first device identifier and the first vehicle identifier.

In a feasible design, after sending the request information to the server, the transceiving module 72 is further configured to receive a first binding identifier from the server, where the first binding identifier is generated by the server according to the first device identifier and the first vehicle identifier; and the processing module 71 is configured to delete a second binding identifier and store the first binding identifier when the first binding identifier and the second binding identifier are different, where the second binding identifier is a binding identifier locally stored by the first deice, and restore to a delivered state.

In a feasible design, the transceiving module 72 is further configured to receive a public key from the server before sending the request information to the server; and
the processing module 71 is further configured to encrypt the first device identifier and the first vehicle identifier using the public key to obtain encrypted data, and generate the request information according to the encrypted data.

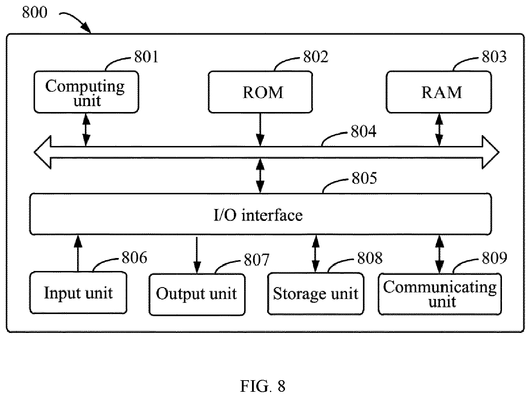

FIG. 8 is a block diagram of an electronic device for implementing an information processing method of an embodiment in the present disclosure, and the electronic device may be an on-board terminal or a server. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital processing, a cellular phone, a smart phone, a wearable device, and other similar computing apparatuses. Components shown herein, their connections and relationships, and their functions are merely examples, which are not intended to limit implementations of the present disclosure described and/or claimed herein.

As shown in FIG. 8, the electronic device 800 includes a computing unit 801, which may perform various appropriate actions and processes according to a computer program stored in a read only memory (ROM) 802 or a computer program loaded from a storage unit 808 to a random access memory (RAM) 803. In the RAM 803, various programs and data required for an operation of the device 800 may also be stored. A computing unit 801, a ROM 802, and a RAM 803 are connected to each other through a bus 804. Input/output (I/O) interface 805 is also connected to bus 804.

A plurality of components in the device 800 are connected to the I/O interface 805, which includes: an input unit 806, such as a keyboard and a mouse; an output unit 807, such as various types of displays and speakers; a storage unit 808, such as a magnetic disk and an optical disk; and a communicating unit 809, such as a network card, a modem, and a wireless communication transceiver. The communicating unit 809 allows the device 800 to exchange information/data with other devices through a computer network such as the Internet and/or various telecommunication networks

The computing unit 801 may be various general-purpose and/or special-purpose processing components with processing and computing capabilities. Some examples of the computing unit 801 include, but are not limited to, a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, etc. The computing unit 801 performs various methods and processes described above, such as the information processing method. For example, in some embodiments, the information processing method may be implemented as a computer software program tangibly embodied in a machine-readable medium, such as the storage unit 808. In some embodiments, part or the entire computer program may be loaded and/or installed on the device 800 via the ROM 802 and/or the communicating unit 809. When the computer program is loaded into the RAM 803 and executed by the computing unit 801, one or more steps of the information processing method described above may be performed. Alternatively, in other embodiments, the computing unit 801 may be configured to perform the information processing method by any other appropriate means (for example, by means of firmware).

According to an embodiment of the present disclosure, the present disclosure further provides a computer program product. The computer program product includes an instruction, where the instruction is stored in a readable storage medium, at least one processor of an electronic device can read the instruction from the readable storage medium, and the at least one processor executes the instruction to enable the electronic device to execute the method in the method embodiments described above.

Various embodiments of systems and technologies described above herein may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), computer hardware, firmware, software, and/or combinations thereof. These various embodiments may include: being implemented in one or more computer programs that may be executed and/or interpreted on a programmable system including at least one programmable processor which may be a special-purpose or general-purpose programmable processor and may receive data and instructions from and transmit the data and the instructions to a storage system, at least one input apparatus, and at least one output apparatus

Program codes for implementing the method of the present disclosure may be written in any combination of one or more programming languages. These program codes may be provided to a processor or a controller of a general-purpose computer, a special-purpose computer, or other programmable data processing apparatus, so that the program codes, when executed by the processor or the controller, enables functions/operations specified in a flowchart and/or a block diagram to be implemented. The program codes may be executed completely on the machine, partially on the machine, partially on the machine as an independent software package, and partially on a remote machine or completely on a remote machine or server.

In the context of the present disclosure, a machine-readable medium may be a tangible medium that may contain or store a program for use by or in conjunction with an instruction execution system, apparatus or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any appropriate combination of the above. More specific examples of the machine readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination of the above.

To provide interactions with a user, the systems and techniques described herein may be implemented on a computer having: a display apparatus (e.g., a CRT (cathode ray tube) or LCD (liquid crystal display) monitor) for displaying information to the user; and a keyboard and a pointing apparatus (e.g., a mouse or a trackball) through which the user may provide input to the computer. Other kinds of apparatuses may also be used to provide interactions with users; for example, a feedback provided to the user may be any form of sensory feedback (for example, a visual feedback, an auditory feedback, or a tactile feedback); and input from the user may be received in any form (including acoustic input, voice input, or tactile input).

The systems and technologies described herein may be implemented in a computing system including background components (e.g., as a data server), a computing system including middleware components (e.g., an application server), or a computing system including front-end components (e.g., a user computer with a graphical user interface or a web browser through which a user may interact with implementations of the systems and techniques described herein), or a computing system including any combination of such background components, middleware components, or front-end components. Components of the systems may be connected to each other through a digital data communication in any form or medium (e.g., communication network). An example of a communication network includes: a local area network (LAN), a wide area network (WAN), and the Internet.

A computer system may include a client and a server. The client and the server are generally remote from each other and usually interact through a communication network. A relationship between the client and the server is generated by a computer program running on a corresponding computer and having a client-server relationship with each other. The server may be a cloud server, also known as a cloud computing server or a cloud host, which is a host product in a cloud computing service system to solve defects of difficult management and weak traffic scalability in a conventional physical host and a VPS service (Virtual Private Server or VPS for short). The server may also be a server of a distributed system or a server combined with a blockchain.

According to the technical solutions in the embodiments of the present disclosure, a vehicle and an on-board terminal are bound automatically, thereby improving binding efficiency and reducing an error rate, and at the same time, achieving that one vehicle can only be bound to one on-board terminal at any time while one on-board terminal can only be bound to one vehicle.

It should be understood that steps may be reordered, added or deleted using various forms of flows shown above. For example, steps described in the present disclosure may be executed in parallel, sequentially, or in a different order, as long as a desired result of the technical solutions disclosed in the present disclosure can be achieved, which is not limited herein.

The above specific implementations do not limit protection scope of the present disclosure. It should be understood by persons skilled in the art that various modifications, combinations, subcombinations, and substitutions may be made according to design requirements and other factors.

## Claims

1. An information processing method, comprising:
receiving, by a server, request information from a first device, wherein the request information carries a first device identifier for identifying the first device and a first vehicle identifier for identifying a first vehicle;
activating (203), by the server, a first binding relationship between the first device identifier and the first vehicle identifier; and
freezing (204), by the server, a second binding relationship and a third binding relationship, wherein the second binding relationship is a binding relationship between the first device identifier and a second vehicle identifier for identifying a second vehicle, and the third binding relationship is a binding relationship between a second device identifier for identifying a second device and the first vehicle identifier,
wherein the activating (203), by the server, a first binding relationship between the first device identifier and the first vehicle identifier, comprises:
generating (503), by the server, the first binding identifier according to the first device identifier and the first vehicle identifier;
when the first binding identifier does not exist in a binding relationship table, adding, by the server, the first binding relationship, the first binding identifier, and a corresponding relationship between the first binding relationship and the first binding identifier to the binding relationship table, wherein the binding relationship table is used to store a corresponding relationship among a device identifier, a vehicle identifier, and a binding identifier, different corresponding relationships contain different binding identifiers, and at least one of the device identifier and the vehicle identifier is different; and
setting, by the server, the first binding identifier as being in an activated state.

2. The method according to claim 1, wherein the generating (503), by the server, a first binding identifier according to the first device identifier and the first vehicle identifier, comprises:
determining, by the server, a first binary number and a second binary number of a first character in the first vehicle identifier, wherein the first binary number is used to represent a position of the first character in the first vehicle identifier, the second binary number is used to represent a value of the first character, and the first character is any character in the first vehicle identifier;
determining, by the server, first target bytes according to the first binary number and the second binary number of each first character in the first vehicle identifier;
determining, by the server, a third binary number and a fourth binary number of a second character in the first device identifier, wherein the third binary number is used to represent a position of the second character in the first device identifier, and the fourth binary number is used to represent a value of the second character;
determining, by the server, second target bytes according to the third binary number and the fourth binary number of each second character in the first device identifier; and
generating, by the server, the first binding identifier according to the first target bytes and the second target bytes.

3. The method according to claim 1, wherein before the freezing (204), by the server, a second binding relationship and a third binding relationship, the method further comprises:
when the first binding identifier does not exist in the binding relationship table, determining (505), by the server, whether the second binding relationship exists in the binding relationship table according to the first device identifier; and
if the second binding relationship exists in the binding relationship table, determining, by the server, that the first device has been bound to the second vehicle.

4. The method according to claim 1, wherein before the freezing (204), by the server, a second binding relationship and a third binding relationship, the method further comprises:
if the first binding identifier does not exist in the binding relationship table, determining (507), by the server, whether the third binding relationship exists in the binding relationship table according to the first vehicle identifier; and
if the third binding relationship exists in the binding relationship table, determining, by the server, that the first vehicle has been bound to the second device.

5. The method according to any one of claims 1 to 4, wherein before the receiving, by the server, request information from a first device, the method further comprises:
generating, by the server, a key pair, wherein the key pair comprises a public key and a private key; and
sending, by the server, the public key to the first device.

6. The method according to claim 5, wherein before the generating (503), by the server, a first binding identifier according to the first device identifier and the first vehicle identifier, the method further comprises:
decrypting (502), by the server, encrypted data carried by the request information using the private key to obtain the first device identifier and the first vehicle identifier, wherein the encrypted data is obtained by the first device through encrypting the first device identifier and the first vehicle identifier using the public key.

7. The method according to any one of claims 1 to 4, wherein after the generating (503), by the server, a first binding identifier according to the first device identifier and the first vehicle identifier, the method further comprises:
sending (509), by the server, the first binding identifier to the first device.

8. An information processing method, comprising:
obtaining (201, 405), by a first device, a first device identifier for identifying the first device and a first vehicle identifier for identifying a first vehicle;
sending (202, 407), by the first device, request information to a server, wherein the request information carries the first device identifier and the first vehicle identifier to enable the server to generate a first binding identifier according to the first device identifier and the first vehicle identifier, when the first binding identifier does not exist in a binding relationship table, add the first binding relationship, the first binding identifier, and a corresponding relationship between the first binding relationship and the first binding identifier to the binding relationship table, wherein the binding relationship table is used to store a corresponding relationship among a device identifier, a vehicle identifier, and a binding identifier, different corresponding relationships contain different binding identifiers, and at least one of the device identifier and the vehicle identifier is different, and set the first binding identifier as being in an activated state;
receiving (501), by the server, said request information from the first device; and
freezing (204, 508), by the server, a second binding relationship and a third binding relationship, wherein the second binding relationship is a binding relationship between the first device identifier and a second vehicle identifier for identifying a second vehicle, and the third binding relationship is a binding relationship between a second device identifier for identifying a second device and the first vehicle identifier.

9. The method according to claim 8, wherein after the sending (202, 407), by the first device, request information to a server, the method further comprises:
receiving, by the first device, the first binding identifier from the server; and
when the first binding identifier and a second binding identifier are different, deleting, by the first device, the second binding identifier and storing the first binding identifier, wherein the second binding identifier is a binding identifier locally stored by the first device; and
restoring (410), by the first device, to a delivered state.

10. The method according to claim 8 or 9, wherein before the sending (202, 407), by the first device, request information to a server, the method further comprises:
receiving, by the first device, a public key from the server;
encrypting (406), by the first device, the first device identifier and the first vehicle identifier using the public key to obtain encrypted data; and
generating, by the first device, the request information according to the encrypted data.

11. An information processing apparatus (600), comprising:
a transceiving module (61), configured to receive request information from a first device, wherein the request information carries a first device identifier for identifying the first device and a first vehicle identifier for identifying a first vehicle;
an activating module (62), configured to activate a first binding relationship between the first device identifier and the first vehicle identifier; and
a processing module (63), configured to freeze a second binding relationship and a third binding relationship, wherein the second binding relationship is a binding relationship between the first device identifier and a second vehicle identifier for identifying a second vehicle, and the third binding relationship is a binding relationship between a second device identifier for identifying a second device and the first vehicle identifier,
wherein the activating module (62) is configured to generate the first binding identifier according to the first device identifier and the first vehicle identifier, when the first binding identifier does not exist in a binding relationship table, add the first binding relationship, the first binding identifier, and a corresponding relationship between the first binding relationship and the first binding identifier to the binding relationship table, wherein the binding relationship table is used to store a corresponding relationship among a device identifier, a vehicle identifier, and a binding identifier, different corresponding relationships contain different binding identifiers, and at least one of the device identifier and the vehicle identifier is different, and set the first binding identifier as being in an activated state.

12. The apparatus (600) according to claim 11, wherein,
when generating the first binding identifier according to the first device identifier and the first vehicle identifier, the activating module (62) is configured to determine a first binary number and a second binary number of a first character in the first vehicle identifier, wherein the first binary number is used to represent a position of the first character in the first vehicle identifier, the second binary number is used to represent a value of the first character, and the first character is any character in the first vehicle identifier; determine first target bytes according to the first binary number and the second binary number of each first character in the first vehicle identifier; determine a third binary number and a fourth binary number of a second character in the first device identifier, wherein the third binary number is used to represent a position of the second character in the first device identifier, and the fourth binary number is used to represent a value of the second character; determine second target bytes according to the third binary number and the fourth binary number of each second character in the first device identifier; and generate the first binding identifier according to the first target bytes and the second target bytes.

13. The apparatus (600) according to claim 12, wherein,
before freezing the second binding relationship and the third binding relationship, the processing module (63) is configured to determine whether the second binding relationship exists in the binding relationship table according to the first device identifier when the first binding identifier does not exist in the binding relationship table; and if the second binding relationship exists in the binding relationship table, determine that the first device has been bound to the second vehicle, and
preferably, before freezing the second binding relationship and the third binding relationship, the processing module (63) is configured to determine whether the third binding relationship exists in the binding relationship table according to the first vehicle identifier if the first binding identifier does not exist in the binding relationship table; and if the third binding relationship exists in the binding relationship table, determine that the first vehicle has been bound to the second device.

14. The apparatus (600) according to claim 12 or 13, wherein,
the processing module (63) is further configured to generate a key pair before the transceiving module (61) receives the request information from the first device, wherein the key pair comprises a public key and a private key; and
the transceiving module (61) is further configured to send the public key to the first device, and
preferably, before generating the first binding identifier according to the first device identifier and the first vehicle identifier, the processing module (63) is further configured to decrypt encrypted data carried by the request information using the private key to obtain the first device identifier and the first vehicle identifier, wherein the encrypted data is obtained by the first device through encrypting the first device identifier and the first vehicle identifier using the public key.

15. A system comprising an
information processing apparatus (700), comprising:
a processing module (71), configured to obtain a first device identifier for identifying a first device and a first vehicle identifier for identifying a first vehicle; and
a transceiving module (72), configured to send request information to a server, wherein the request information carries the first device identifier and the first vehicle identifier to enable the server to generate a first binding identifier according to the first device identifier and the first vehicle identifier, when the first binding identifier does not exist in a binding relationship table, add the first binding relationship, the first binding identifier, and a corresponding relationship between the first binding relationship and the first binding identifier to the binding relationship table, wherein the binding relationship table is used to store a corresponding relationship among a device identifier, a vehicle identifier, and a binding identifier, different corresponding relationships contain different binding identifiers, and at least one of the device identifier and the vehicle identifier is different, and set the first binding identifier as being in an activated state;
and the server comprising:
a transceiving module (61) configured to receive said request information from the apparatus (700);
a processing module (63) configured to freeze (204, 508) a second binding relationship and a third binding relationship, wherein the second binding relationship is a binding relationship between the first device identifier and a second vehicle identifier for identifying a second vehicle, and the third binding relationship is a binding relationship between a second device identifier for identifying a second device and the first vehicle identifier.

16. A non-transitory computer readable storage medium storing a computer instruction, wherein the computer instruction is used to enable an electronic device to execute the method according to any one of claims 1 to 7 or 8 to 10.

17. A computer program product which, when running on an electronic device, enables the electronic device to execute the method according to any one of claims 1 to 7 or 8 to 10.

## Patentansprüche

1. Informationsverarbeitungsverfahren, das Folgendes umfasst:
Empfangen, durch einen Server, von Anforderungsinformationen von einer ersten Vorrichtung, wobei die Anforderungsinformationen einen ersten Vorrichtungsidentifikator zum Identifizieren der ersten Vorrichtung und einen ersten Fahrzeugidentifikator zum Identifizieren eines ersten Fahrzeugs tragen;
Aktivieren (203), durch den Server, einer ersten Bindungsbeziehung zwischen dem ersten Vorrichtungsidentifikator und dem ersten Fahrzeugidentifikator; und
Einfrieren (204), durch den Server, einer zweiten Bindungsbeziehung und einer dritten Bindungsbeziehung, wobei die zweite Bindungsbeziehung eine Bindungsbeziehung zwischen dem ersten Vorrichtungsidentifikator und einem zweiten Fahrzeugidentifikator zur Identifizierung eines zweiten Fahrzeugs ist, und die dritte Bindungsbeziehung eine Bindungsbeziehung zwischen einem zweiten Vorrichtungsidentifikator zur Identifizierung einer zweiten Vorrichtung und des ersten Fahrzeugidentifikators ist,
wobei das Aktivieren (203), durch den Server, einer ersten Bindungsbeziehung zwischen dem ersten Vorrichtungsidentifikator und dem ersten Fahrzeugidentifikator Folgendes umfasst:
Erzeugen (503), durch den Server, des ersten Bindungsidentifikators gemäß dem ersten Vorrichtungsidentifikator und dem ersten Fahrzeugidentifikator;
wenn der erste Bindungsidentifikator nicht in einer Bindungsbeziehungstabelle existiert, Hinzufügen, durch den Server, der ersten Bindungsbeziehung, des ersten Bindungsidentifikators und einer entsprechenden Beziehung zwischen der ersten Bindungsbeziehung und dem ersten Bindungsidentifikator zu der Bindungsbeziehungstabelle, wobei die Bindungsbeziehungstabelle verwendet wird, um eine entsprechende Beziehung zwischen einem Vorrichtungsidentifikator, einem Fahrzeugidentifikator und einem Bindungsidentifikator zu speichern, wobei unterschiedliche entsprechende Beziehungen unterschiedliche Bindungsidentifikatoren enthalten, und mindestens einer des Vorrichtungsidentifikators und des Fahrzeugidentifikators unterschiedlich ist; und
Einstellen, durch den Server, des ersten Bindungsidentifikators als in einem aktivierten Zustand befindlich.

2. Verfahren nach Anspruch 1, wobei das Erzeugen (503), durch den Server, eines ersten Bindungsidentifikators gemäß dem ersten Vorrichtungsidentifikator und dem ersten Fahrzeugidentifikator Folgendes umfasst:
Bestimmen, durch den Server, einer ersten Binärzahl und einer zweiten Binärzahl eines ersten Zeichens in dem ersten Fahrzeugidentifikator, wobei die erste Binärzahl verwendet wird, um eine Position des ersten Zeichens in dem ersten Fahrzeugidentifikator darzustellen, die zweite Binärzahl verwendet wird, um einen Wert des ersten Zeichens darzustellen, und das erste Zeichen ein beliebiges Zeichen in dem ersten Fahrzeugidentifikator ist;
Bestimmen, durch den Server, von ersten Zielbytes gemäß der ersten Binärzahl und der zweiten Binärzahl jedes ersten Zeichens in dem ersten Fahrzeugidentifikator;
Bestimmen, durch den Server, einer dritten Binärzahl und einer vierten Binärzahl eines zweiten Zeichens in dem ersten Vorrichtungsidentifikator, wobei die dritte Binärzahl verwendet wird, um eine Position des zweiten Zeichens in dem ersten Vorrichtungsidentifikator darzustellen, und die vierte Binärzahl verwendet wird, um einen Wert des zweiten Zeichens darzustellen;
Bestimmen, durch den Server, von zweiten Zielbytes gemäß der dritten Binärzahl und der vierten Binärzahl jedes zweiten Zeichens in dem ersten Vorrichtungsidentifikator;
und
Erzeugen, durch den Server, des ersten Bindungsidentifikators gemäß den ersten Zielbytes und den zweiten Zielbytes.

3. Verfahren nach Anspruch 1, wobei das Verfahren vor dem Einfrieren (204) einer zweiten Bindungsbeziehung und einer dritten Bindungsbeziehung durch den Server ferner Folgendes umfasst:
wenn der erste Bindungsidentifikator nicht in der Bindungsbeziehungstabelle existiert, Bestimmen (505), durch den Server, ob die zweite Bindungsbeziehung in der Bindungsbeziehungstabelle gemäß dem ersten Vorrichtungsidentifikator existiert; und
wenn die zweite Bindungsbeziehung in der Bindungsbeziehungstabelle existiert, Bestimmen, durch den Server, dass die erste Vorrichtung an das zweite Fahrzeug gebunden wurde.

4. Verfahren nach Anspruch 1, wobei das Verfahren vor dem Einfrieren (204) einer zweiten Bindungsbeziehung und einer dritten Bindungsbeziehung durch den Server ferner Folgendes umfasst:
wenn der erste Bindungsidentifikator nicht in der Bindungsbeziehungstabelle existiert, Bestimmen (507), durch den Server, ob die dritte Bindungsbeziehung in der Bindungsbeziehungstabelle gemäß dem ersten Fahrzeugidentifikator existiert; und
wenn die dritte Bindungsbeziehung in der Bindungsbeziehungstabelle existiert, Bestimmen, durch den Server, dass das erste Fahrzeug an die zweite Vorrichtung gebunden wurde.

5. Verfahren nach einem der Ansprüche 1 bis 4, wobei vor dem Empfangen von Anforderungsinformationen von einer ersten Vorrichtung durch den Server das Verfahren ferner Folgendes umfasst:
Erzeugen, durch den Server, eines Schlüsselpaares, wobei das Schlüsselpaar einen öffentlichen Schlüssel und einen privaten Schlüssel umfasst; und
Senden des öffentlichen Schlüssels durch den Server an die erste Vorrichtung.

6. Verfahren nach Anspruch 5, wobei vor dem Erzeugen (503), durch den Server, eines ersten Bindungsidentifikators gemäß dem ersten Vorrichtungsidentifikator und dem ersten Fahrzeugidentifikator das Verfahren ferner Folgendes umfasst:
Entschlüsseln (502), durch den Server, von verschlüsselten Daten, die von den Anforderungsinformationen getragen werden, unter Verwendung des privaten Schlüssels, um den ersten Vorrichtungsidentifikator und den ersten Fahrzeugidentifikator zu erhalten, wobei die verschlüsselten Daten durch die erste Vorrichtung durch Verschlüsselung des ersten Vorrichtungsidentifikators und des ersten Fahrzeugidentifikators unter Verwendung des öffentlichen Schlüssels erhalten werden.

7. Verfahren nach einem der Ansprüche 1 bis 4, wobei nach dem Erzeugen (503), durch den Server, eines ersten Bindungsidentifikators gemäß dem ersten Vorrichtungsidentifikator und dem ersten Fahrzeugidentifikator das Verfahren ferner Folgendes umfasst:
Senden (509), durch den Server, des ersten Bindungsidentifikators an die erste Vorrichtung.

8. Informationsverarbeitungsverfahren, das Folgendes umfasst:
Erhalten (201, 405), durch eine erste Vorrichtung, eines ersten Vorrichtungsidentifikators zum Identifizieren der ersten Vorrichtung und eines ersten Fahrzeugidentifikators zum Identifizieren eines ersten Fahrzeugs;
Senden (202, 407) von Anforderungsinformationen durch die erste Vorrichtung an einen Server, wobei die Anforderungsinformationen den ersten Vorrichtungsidentifikator und den ersten Fahrzeugidentifikator tragen, um den Server in die Lage zu versetzen, einen ersten Bindungsidentifikator gemäß dem ersten Vorrichtungsidentifikator und dem ersten Fahrzeugidentifikator zu erzeugen, wenn der erste Bindungsidentifikator nicht in einer Bindungsbeziehungstabelle existiert, Hinzufügen der ersten Bindungsbeziehung, des ersten Bindungsidentifikators und einer entsprechenden Beziehung zwischen der ersten Bindungsbeziehung und dem ersten Bindungsidentifikator zu der Bindungsbeziehungstabelle, wobei die Bindungsbeziehungstabelle verwendet wird, um eine entsprechende Beziehung zwischen einem Vorrichtungsidentifikator, einem Fahrzeugidentifikator und einem Bindungsidentifikator zu speichern, wobei unterschiedliche entsprechende Beziehungen unterschiedliche Bindungsidentifikatoren enthalten, und mindestens einer des Vorrichtungsidentifikators und des Fahrzeugidentifikators unterschiedlich ist, und wobei der erste Bindungsidentifikator als in einem aktivierten Zustand befindlich eingestellt wird;
Empfangen (501), durch den Server, der Anforderungsinformationen von der ersten Vorrichtung; und
Einfrieren (204, 508), durch den Server, einer zweiten Bindungsbeziehung und einer dritten Bindungsbeziehung, wobei die zweite Bindungsbeziehung eine Bindungsbeziehung zwischen dem ersten Vorrichtungsidentifikator und einem zweiten Fahrzeugidentifikator zur Identifizierung eines zweiten Fahrzeugs ist, und die dritte Bindungsbeziehung eine Bindungsbeziehung zwischen einem zweiten Vorrichtungsidentifikator zur Identifizierung einer zweiten Vorrichtung und des ersten Fahrzeugidentifikators ist.

9. Verfahren nach Anspruch 8, wobei nach dem Senden (202, 407) von Anforderungsinformationen durch die erste Vorrichtung an einen Server das Verfahren ferner Folgendes umfasst:
Empfangen, durch die erste Vorrichtung, des ersten Bindungsidentifikators von dem Server; und
wenn der erste Bindungsidentifikator und ein zweiter Bindungsidentifikator unterschiedlich sind, Löschen des zweiten Bindungsidentifikators durch die erste Vorrichtung und Speichern des ersten Bindungsidentifikators, wobei der zweite Bindungsidentifikator ein Bindungsidentifikator ist, der lokal von der ersten Vorrichtung gespeichert wird; und
Wiederherstellen (410), durch die erste Vorrichtung, eines ausgelieferten Zustands.

10. Verfahren nach Anspruch 8 oder 9, wobei vor dem Senden (202, 407) von Anforderungsinformationen durch die erste Vorrichtung an einen Server das Verfahren ferner Folgendes umfasst:
Empfangen, durch die erste Vorrichtung, eines öffentlichen Schlüssels von dem Server;
Verschlüsseln (406), durch die erste Vorrichtung, des ersten Vorrichtungsidentifikators und des ersten Fahrzeugidentifikators unter Verwendung des öffentlichen Schlüssels, um verschlüsselte Daten zu erhalten; und
Erzeugen, durch die erste Vorrichtung, der Anforderungsinformationen gemäß den verschlüsselten Daten.

11. Informationsverarbeitungsvorrichtung (600), die Folgendes umfasst:
ein Sende-/Empfangsmodul (61), das dafür konfiguriert ist, Anforderungsinformationen von einer ersten Vorrichtung zu empfangen, wobei die Anforderungsinformationen einen ersten Vorrichtungsidentifikator zum Identifizieren der ersten Vorrichtung und einen ersten Fahrzeugidentifikator zum Identifizieren eines ersten Fahrzeugs tragen;
ein Aktivierungsmodul (62), das dafür konfiguriert ist, eine erste Bindungsbeziehung zwischen dem ersten Vorrichtungsidentifikator und dem ersten Fahrzeugidentifikator zu aktivieren; und
ein Verarbeitungsmodul (63), das zum Einfrieren einer zweiten Bindungsbeziehung und einer dritten Bindungsbeziehung konfiguriert ist, wobei die zweite Bindungsbeziehung eine Bindungsbeziehung zwischen dem ersten Vorrichtungsidentifikator und einem zweiten Fahrzeugidentifikator zur Identifizierung eines zweiten Fahrzeugs ist, und die dritte Bindungsbeziehung eine Bindungsbeziehung zwischen einem zweiten Vorrichtungsidentifikator zur Identifizierung einer zweiten Vorrichtung und des ersten Fahrzeugidentifikators ist,
wobei das Aktivierungsmodul (62) dafür konfiguriert ist, den ersten Bindungsidentifikator gemäß dem ersten Vorrichtungsidentifikator und dem ersten Fahrzeugidentifikator zu erzeugen, wenn der erste Bindungsidentifikator nicht in einer Bindungsbeziehungstabelle existiert, Hinzufügen der ersten Bindungsbeziehung, des ersten Bindungsidentifikators und einer entsprechenden Beziehung zwischen der ersten Bindungsbeziehung und dem ersten Bindungsidentifikator zu der Bindungsbeziehungstabelle, wobei die Bindungsbeziehungstabelle verwendet wird, um eine entsprechende Beziehung zwischen einem Vorrichtungsidentifikator, einem Fahrzeugidentifikator und einem Bindungsidentifikator zu speichern, wobei unterschiedliche entsprechende Beziehungen unterschiedliche Bindungsidentifikatoren enthalten, und mindestens einer des Vorrichtungsidentifikators und des Fahrzeugidentifikators unterschiedlich ist, und wobei der erste Bindungsidentifikator als in einem aktivierten Zustand befindlich eingestellt wird;

12. Vorrichtung (600) nach Anspruch 11, wobei
beim Erzeugen des ersten verbindlichen Identifikators gemäß dem ersten Vorrichtungsidentifikator und dem ersten Fahrzeugidentifikator das Aktivierungsmodul (62) dafür konfiguriert ist, eine erste Binärzahl und eine zweite Binärzahl eines ersten Zeichens in dem ersten Fahrzeugidentifikator zu bestimmen, wobei die erste Binärzahl verwendet wird, um eine Position des ersten Zeichens in dem ersten Fahrzeugidentifikator darzustellen, die zweite Binärzahl verwendet wird, um einen Wert des ersten Zeichens darzustellen, und das erste Zeichen ein beliebiges Zeichen in dem ersten Fahrzeugidentifikator ist; Bestimmen von ersten Zielbytes gemäß der ersten Binärzahl und der zweiten Binärzahl jedes ersten Zeichens in dem ersten Fahrzeugidentifikator; Bestimmen einer dritten Binärzahl und einer vierten Binärzahl eines zweiten Zeichens in dem ersten Vorrichtungsidentifikator, wobei die dritte Binärzahl verwendet wird, um eine Position des zweiten Zeichens in dem ersten Vorrichtungsidentifikator darzustellen, und die vierte Binärzahl verwendet wird, um einen Wert des zweiten Zeichens darzustellen; Bestimmen von zweiten Zielbytes gemäß der dritten Binärzahl und der vierten Binärzahl jedes zweiten Zeichens in dem ersten Vorrichtungsidentifikator; und Erzeugen des ersten Bindungsidentifikators gemäß den ersten Zielbytes und den zweiten Zielbytes.

13. Vorrichtung (600) nach Anspruch 12, wobei,
vor dem Einfrieren der zweiten Bindungsbeziehung und der dritten Bindungsbeziehung, das Verarbeitungsmodul (63) dafür konfiguriert ist, zu bestimmen, ob die zweite Bindungsbeziehung in der Bindungsbeziehungstabelle gemäß dem ersten Vorrichtungsidentifikator existiert, wenn der erste Bindungsidentifikator nicht in der Bindungsbeziehungstabelle existiert; und wenn die zweite Bindungsbeziehung in der Bindungsbeziehungstabelle existiert, Bestimmen, dass die erste Vorrichtung an das zweite Fahrzeug gebunden wurde, und
vorzugsweise vor dem Einfrieren der zweiten Bindungsbeziehung und der dritten Bindungsbeziehung das Verarbeitungsmodul (63) dafür konfiguriert ist, zu bestimmen, ob die dritte Bindungsbeziehung in der Bindungsbeziehungstabelle gemäß dem ersten Fahrzeugsidentifikator existiert, wenn der erste Bindungsidentifikator nicht in der Bindungsbeziehungstabelle existiert; und wenn die dritte Bindungsbeziehung in der Bindungsbeziehungstabelle existiert, Bestimmen, dass das erste Fahrzeug an die zweite Vorrichtung gebunden wurde.

14. Vorrichtung (600) nach Anspruch 12 oder 13, wobei
das Verarbeitungsmodul (63) ferner dafür konfiguriert ist, ein Schlüsselpaar zu erzeugen, bevor das Sende-/Empfangsmodul (61) die Anforderungsinformationen von der ersten Vorrichtung empfängt, wobei das Schlüsselpaar einen öffentlichen Schlüssel und einen privaten Schlüssel umfasst; und
das Sende-/Empfangsmodul (61) ferner dafür konfiguriert ist, den öffentlichen Schlüssel an die erste Vorrichtung zu senden, und
vorzugsweise vor der Erzeugung des ersten Bindungsidentifikators gemäß dem ersten Vorrichtungsidentifikator und dem ersten Fahrzeugidentifikator das Verarbeitungsmodul (63) ferner dafür konfiguriert ist, verschlüsselte Daten, die von den Anforderungsinformationen getragen werden, unter Verwendung des privaten Schlüssels zu entschlüsseln, um den ersten Vorrichtungsidentifikator und den ersten Fahrzeugidentifikator zu erhalten, wobei die verschlüsselten Daten durch die erste Vorrichtung durch Verschlüsselung des ersten Vorrichtungsidentifikators und des ersten Fahrzeugidentifikators unter Verwendung des öffentlichen Schlüssels erhalten werden.

15. System, das eine Informationsverarbeitungsvorrichtung (700) umfasst, die Folgendes umfasst:
ein Verarbeitungsmodul (71), das dafür konfiguriert ist, einen ersten Vorrichtungsidentifikator zum Identifizieren einer ersten Vorrichtung und einen ersten Fahrzeugidentifikator zum Identifizieren eines ersten Fahrzeugs zu erhalten; und
ein Sende-/Empfangsmodul (72), das dafür konfiguriert ist, Anforderungsinformationen an einen Server zu senden, wobei die Anforderungsinformationen den ersten Vorrichtungsidentifikator und den ersten Fahrzeugidentifikator tragen, um den Server in die Lage zu versetzen, einen ersten Bindungsidentifikator gemäß dem ersten Vorrichtungsidentifikator und dem ersten Fahrzeugidentifikator zu erzeugen, wenn der erste Bindungsidentifikator nicht in einer Bindungsbeziehungstabelle existiert, Hinzufügen der ersten Bindungsbeziehung, des ersten Bindungsidentifikators und einer entsprechenden Beziehung zwischen der ersten Bindungsbeziehung und dem ersten Bindungsidentifikator zu der Bindungsbeziehungstabelle, wobei die Bindungsbeziehungstabelle verwendet wird, um eine entsprechende Beziehung zwischen einem Vorrichtungsidentifikator, einem Fahrzeugidentifikator und einem Bindungsidentifikator zu speichern, wobei unterschiedliche entsprechende Beziehungen unterschiedliche Bindungsidentifikatoren enthalten, und mindestens einer des Vorrichtungsidentifikators und des Fahrzeugidentifikators unterschiedlich ist, und wobei der erste Bindungsidentifikator als in einem aktivierten Zustand befindlich eingestellt wird;
und wobei der Server Folgendes umfasst:
ein Sende-/Empfangsmodul (61), das dafür konfiguriert ist, die Anforderungsinformationen von der Einrichtung (700) zu empfangen;
ein Verarbeitungsmodul (63), das zum Einfrieren (204, 508) einer zweiten Bindungsbeziehung und einer dritten Bindungsbeziehung konfiguriert ist, wobei die zweite Bindungsbeziehung eine Bindungsbeziehung zwischen dem ersten Vorrichtungsidentifikator und einem zweiten Fahrzeugidentifikator zur Identifizierung eines zweiten Fahrzeugs ist, und die dritte Bindungsbeziehung eine Bindungsbeziehung zwischen einem zweiten Vorrichtungsidentifikator zur Identifizierung einer zweiten Vorrichtung und des ersten Fahrzeugidentifikators ist.

16. Nicht-flüchtiges, computerlesbares Speichermedium, das einen Computerbefehl speichert, wobei der Computerbefehl verwendet wird, um eine elektronische Vorrichtung in die Lage zu versetzen, das Verfahren nach einem der Ansprüche 1 bis 7 oder 8 bis 10 auszuführen.

17. Computerprogrammprodukt, das, wenn es auf einer elektronischen Vorrichtung ausgeführt wird, die elektronische Vorrichtung in die Lage versetzt, das Verfahren nach einem der Ansprüche 1 bis 7 oder 8 bis 10 auszuführen.

## Revendications

1. Procédé de traitement d'informations, comprenant :
la réception, par un serveur, d'informations de requête à partir d'un premier dispositif, dans lequel les informations de requête transportent un premier identifiant de dispositif pour identifier le premier dispositif et un premier identifiant de véhicule pour identifier un premier véhicule ;
l'activation (203), par le serveur, d'une première relation de liaison entre le premier identifiant de dispositif et le premier identifiant de véhicule ; et
le blocage (204), par le serveur, d'une deuxième relation de liaison et d'une troisième relation de liaison, dans lequel la deuxième relation de liaison est une relation de liaison entre le premier identifiant de dispositif et un deuxième identifiant de véhicule pour identifier un deuxième véhicule, et la troisième relation de liaison est une relation de liaison entre un deuxième identifiant de dispositif pour identifier un deuxième dispositif et le premier identifiant de véhicule,
dans lequel l'activation (203), par le serveur, d'une première relation de liaison entre le premier identifiant de dispositif et le premier identifiant de véhicule, comprend :
la génération (503), par le serveur, du premier identifiant de liaison en fonction du premier identifiant de dispositif et du premier identifiant de véhicule ;
lorsque le premier identifiant de liaison n'existe pas dans une table de relations de liaison, l'ajout, par le serveur, de la première relation de liaison, du premier identifiant de liaison et d'une relation correspondante entre la première relation de liaison et le premier identifiant de liaison à la table de relations de liaison, dans lequel la table de relations de liaison est utilisée pour stocker une relation correspondante entre un identifiant de dispositif, un identifiant de véhicule et un identifiant de liaison, différentes relations correspondantes contiennent différents identifiants de liaison, et au moins l'un parmi l'identifiant de dispositif et l'identifiant de véhicule est différent ; et
l'établissement, par le serveur, du premier identifiant de liaison comme étant dans un état activé.

2. Procédé selon la revendication 1, dans lequel la génération (503), par le serveur, d'un premier identifiant de liaison selon le premier identifiant de dispositif et le premier identifiant de véhicule, comprend :
la détermination, par le serveur, d'un premier nombre binaire et d'un deuxième nombre binaire d'un premier caractère dans le premier identifiant de véhicule, dans lequel le premier nombre binaire est utilisé pour représenter une position du premier caractère dans le premier identifiant de véhicule, le deuxième nombre binaire est utilisé pour représenter une valeur du premier caractère,
et le premier caractère est n'importe quel caractère dans le premier identifiant de véhicule ;
la détermination, par le serveur, de premiers octets cibles selon le premier nombre binaire et le deuxième nombre binaire de chaque premier caractère dans le premier identifiant de véhicule ;
la détermination, par le serveur, d'un troisième nombre binaire et d'un quatrième nombre binaire d'un deuxième caractère dans le premier identifiant de dispositif, dans lequel le troisième nombre binaire est utilisé pour représenter une position du deuxième caractère dans le premier identifiant de dispositif, et le quatrième nombre binaire nombre est utilisé pour représenter une valeur du deuxième caractère ;
la détermination, par le serveur, de deuxièmes octets cibles selon le troisième nombre binaire et le quatrième nombre binaire de chaque deuxième caractère dans le premier identifiant de dispositif ;
et
la génération, par le serveur, du premier identifiant de liaison selon les premiers octets cibles et les deuxièmes octets cibles.

3. Procédé selon la revendication 1, dans lequel avant le blocage (204), par le serveur, d'une deuxième relation de liaison et d'une troisième relation de liaison, le procédé comprend en outre :
lorsque le premier identifiant de liaison n'existe pas dans la table de relations de liaison, la détermination (505), par le serveur, si la deuxième relation de liaison existe dans la table de relations de liaison selon le premier identifiant de dispositif ; et
si la deuxième relation de liaison existe dans la table de relations de liaison, la détermination, par le serveur, que le premier dispositif a été lié au deuxième véhicule.

4. Procédé selon la revendication 1, dans lequel avant le blocage (204), par le serveur, d'une deuxième relation de liaison et d'une troisième relation de liaison, le procédé comprend en outre :
si le premier identifiant de liaison n'existe pas dans la table de relations de liaison, la détermination (507), par le serveur, si la troisième relation de liaison existe dans la table de relations de liaison selon le premier identifiant de véhicule ; et
si la troisième relation de liaison existe dans la table de relations de liaison, la détermination, par le serveur, que le premier véhicule a été lié au deuxième dispositif.

5. Procédé selon l'une quelconque des revendications 1 à 4, dans lequel avant la réception, par le serveur, d'informations de requête à partir d'un premier dispositif, le procédé comprend en outre :
la génération, par le serveur, d'une paire de clés, dans lequel la paire de clés comprend une clé publique et une clé privée ; et
l'envoi, par le serveur, de la clé publique au premier dispositif.

6. Procédé selon la revendication 5, dans lequel avant la génération (503), par le serveur, d'un premier identifiant de liaison selon le premier identifiant de dispositif et le premier identifiant de véhicule, le procédé comprend en outre :
le décryptage (502), par le serveur, de données cryptées transportées par les informations de requête en utilisant la clé privée pour obtenir le premier identifiant de dispositif et le premier identifiant de véhicule, dans lequel les données cryptées sont obtenues par le premier dispositif en cryptant le premier identifiant de dispositif et le premier identifiant de véhicule en utilisant la clé publique.

7. Procédé selon l'une quelconque des revendications 1 à 4, dans lequel après la génération (503), par le serveur, d'un premier identifiant de liaison selon le premier identifiant de dispositif et le premier identifiant de véhicule, le procédé comprend en outre :
l'envoi (509), par le serveur, du premier identifiant de liaison au premier dispositif.

8. Procédé de traitement d'informations, comprenant :
l'obtention (201, 405), par un premier dispositif, d'un premier identifiant de dispositif pour identifier le premier dispositif et d'un premier identifiant de véhicule pour identifier un premier véhicule ;
l'envoi (202, 407), par le premier dispositif, d'informations de requête à un serveur, dans lequel les informations de requête transportent le premier identifiant de dispositif et le premier identifiant de véhicule pour permettre au serveur de générer un premier identifiant de liaison selon le premier identifiant de dispositif et le premier identifiant de véhicule, lorsque le premier identifiant de liaison n'existe pas dans une table de relations de liaison, ajouter la première relation de liaison, le premier identifiant de liaison et une relation correspondante entre la première relation de liaison et le premier identifiant de liaison à la table de relations de liaison, dans lequel la table de relations de liaison est utilisée pour stocker une relation correspondante entre un identifiant de dispositif,
un identifiant de véhicule et un identifiant de liaison, différentes relations correspondantes contiennent différents identifiants de liaison, et au moins l'un parmi l'identifiant de dispositif et
l'identifiant de véhicule est différent, et établir le premier identifiant de liaison comme étant dans un état activé ;
la réception (501), par le serveur, desdites informations de requête à partir du premier dispositif ;
et
le blocage (204, 508), par le serveur, d'une deuxième relation de liaison et d'une troisième relation de liaison, dans lequel la deuxième relation de liaison est une relation de liaison entre le premier identifiant de dispositif et un deuxième identifiant de véhicule pour identifier un deuxième véhicule, et la troisième relation de liaison est une relation de liaison entre un deuxième identifiant de dispositif pour identifier un deuxième dispositif et le premier identifiant de véhicule.

9. Procédé selon la revendication 8, dans lequel après l'envoi (202, 407), par le premier dispositif, d'informations de requête à un serveur, le procédé comprend en outre :
la réception, par le premier dispositif, du premier identifiant de liaison à partir du serveur ; et
lorsque le premier identifiant de liaison et un deuxième identifiant de liaison sont différents, la suppression, par le premier dispositif, du deuxième identifiant de liaison et le stockage du premier identifiant de liaison, dans lequel le deuxième identifiant de liaison est un identifiant de liaison stocké localement par le premier dispositif ; et
la restauration (410), par le premier dispositif, à un état délivré.

10. Procédé selon la revendication 8 ou 9, dans lequel avant l'envoi (202, 407), par le premier dispositif, d'informations de requête à un serveur, le procédé comprend en outre :
la réception, par le premier dispositif, d'une clé publique à partir du serveur ;
le cryptage (406), par le premier dispositif, du premier identifiant de dispositif et du premier identifiant de véhicule en utilisant la clé publique pour obtenir des données cryptées ; et
la génération, par le premier dispositif, des informations de requête selon les données cryptées.

11. Appareil de traitement d'informations (600), comprenant :
un module d'émission-réception (61), configuré pour recevoir des informations de requête à partir d'un premier dispositif, dans lequel les informations de requête transportent un premier identifiant de dispositif pour identifier le premier dispositif et un premier identifiant de véhicule pour identifier un premier véhicule ;
un module d'activation (62), configuré pour activer une première relation de liaison entre le premier identifiant de dispositif et le premier identifiant de véhicule ; et
un module de traitement (63), configuré pour bloquer une deuxième relation de liaison et une troisième relation de liaison, dans lequel la deuxième relation de liaison est une relation de liaison entre le premier identifiant de dispositif et un deuxième identifiant de véhicule pour identifier un deuxième véhicule, et la troisième relation de liaison relation est une relation de liaison entre un deuxième identifiant de dispositif pour identifier un deuxième dispositif et le premier identifiant de véhicule,
dans lequel le module d'activation (62) est configuré pour générer le premier identifiant de liaison selon le premier identifiant de dispositif et le premier identifiant de véhicule, lorsque le premier identifiant de liaison n'existe pas dans une table de relations de liaison, ajouter la première relation de liaison, le premier identifiant de liaison et une relation correspondante entre la première relation de liaison et le premier identifiant de liaison à la table de relations de liaison, dans lequel la table de relations de liaison est utilisée pour stocker une relation correspondante entre un identifiant de dispositif, un identifiant de véhicule et un identifiant de liaison, différentes relations correspondantes contiennent différents identifiants de liaison, et au moins l'un parmi l'identifiant de dispositif et l'identifiant de véhicule est différent, et établir le premier identifiant de liaison comme étant dans un état activé.

12. Appareil (600) selon la revendication 11, dans lequel,
lors de la génération du premier identifiant de liaison selon le premier identifiant de dispositif et le premier identifiant de véhicule, le module d'activation (62) est configuré pour déterminer un premier nombre binaire et un deuxième nombre binaire d'un premier caractère dans le premier identifiant de véhicule, dans lequel le premier nombre binaire est utilisé pour représenter une position du premier caractère dans le premier identifiant de véhicule, le deuxième nombre binaire est utilisé pour représenter une valeur du premier caractère, et le premier caractère est n'importe quel caractère du premier identifiant de véhicule ; déterminer des premiers octets cibles selon le premier nombre binaire et le deuxième nombre binaire de chaque premier caractère dans le premier identifiant de véhicule ; déterminer un troisième nombre binaire et un quatrième nombre binaire d'un deuxième caractère dans le premier identifiant de dispositif, dans lequel le troisième nombre binaire est utilisé pour représenter une position du deuxième caractère dans le premier identifiant de dispositif, et le quatrième nombre binaire est utilisé pour représenter une valeur du deuxième caractère ; déterminer des deuxièmes octets cibles selon le troisième nombre binaire et le quatrième nombre binaire de chaque deuxième caractère dans le premier identifiant de dispositif ; et générer le premier identifiant de liaison selon les premiers octets cibles et les deuxièmes octets cibles.

13. Appareil (600) selon la revendication 12, dans lequel,
avant le blocage de la deuxième relation de liaison et la troisième relation de liaison, le module de traitement (63) est configuré pour déterminer si la deuxième relation de liaison existe dans la table de relations de liaison selon le premier identifiant de dispositif lorsque le premier identifiant de liaison n'existe pas dans la table de relations de liaison ; et si la deuxième relation de liaison existe dans la table de relations de liaison, déterminer que le premier dispositif a été lié au deuxième véhicule, et
préférablement, avant le blocage de la deuxième relation de liaison et la troisième relation de liaison, le module de traitement (63) est configuré pour déterminer si la troisième relation de liaison existe dans la table de relations de liaison selon le premier identifiant de véhicule si le premier identifiant de liaison n'existe pas dans la table de relations de liaison ; et si la troisième relation de liaison existe dans la table de relations de liaison, déterminer que le premier véhicule a été lié au deuxième dispositif.

14. Appareil (600) selon la revendication 12 ou 13, dans lequel
le module de traitement (63) est en outre configuré pour générer une paire de clés avant que le module d'émission-réception (61) ne reçoive les informations de requête à partir du premier dispositif, dans lequel la paire de clés comprend une clé publique et une clé privée ; et
le module d'émission-réception (61) est en outre configuré pour envoyer la clé publique au premier dispositif, et
préférablement, avant la génération du premier identifiant de liaison selon le premier identifiant de dispositif et le premier identifiant de véhicule, le module de traitement (63) est en outre configuré pour décrypter des données cryptées transportées par les informations de requête en utilisant la clé privée pour obtenir le premier identifiant de dispositif et le premier identifiant de véhicule, dans lequel les données cryptées sont obtenues par le premier dispositif par le cryptage du premier identifiant de dispositif et du premier identifiant de véhicule en utilisant la clé publique.

15. Système comprenant un appareil de traitement d'informations (700), comprenant :
un module de traitement (71), configuré pour obtenir un premier identifiant de dispositif pour identifier un premier dispositif et un premier identifiant de véhicule pour identifier un premier véhicule ; et
un module d'émission-réception (72), configuré pour envoyer des informations de requête à un serveur, dans lequel les informations de requête transportent le premier identifiant de dispositif et
le premier identifiant de véhicule pour permettre au serveur de générer un premier identifiant de liaison selon le premier identifiant de dispositif et le premier identifiant de véhicule, lorsque le premier identifiant de liaison n'existe pas dans une table de relations de liaison, ajouter la première relation de liaison, le premier identifiant de liaison et une relation correspondante entre la première relation de liaison et le premier identifiant de liaison à la table de relations de liaison, dans lequel la table de relations de liaison est utilisée pour stocker une relation correspondante entre un identifiant de dispositif, un identifiant de véhicule et un identifiant de liaison, différentes relations correspondantes contiennent différents identifiants de liaison, et au moins l'un parmi l'identifiant de dispositif et l'identifiant de véhicule est différent, et établir le premier identifiant de liaison comme étant dans un état activé ; et
le serveur comprenant :
un module d'émission-réception (61) configuré pour recevoir lesdites informations de requête à partir de l'appareil (700) ; un module de traitement (63) configuré pour bloquer (204, 508) une deuxième relation de liaison et une troisième relation de liaison, dans lequel la deuxième relation de liaison est une relation de liaison entre le premier identifiant de dispositif et un deuxième identifiant de véhicule pour identifier un deuxième véhicule, et la troisième relation de liaison est une relation de liaison entre un deuxième identifiant de dispositif pour identifier un deuxième dispositif et le premier identifiant de véhicule.

16. Support de stockage lisible par ordinateur non transitoire stockant une instruction informatique, dans lequel l'instruction informatique est utilisée pour permettre à un dispositif électronique d'exécuter le procédé selon l'une quelconque des revendications 1 à 7 ou 8 à 10.

17. Produit programme d'ordinateur qui, lorsqu'il s'exécute sur un dispositif électronique, permet au dispositif électronique d'exécuter le procédé selon l'une quelconque des revendications 1 à 7 ou 8 à 10.
